# EUROPEAN PATENT APPLICATION

(11) **EP 3 121 576 A1**
(43) Date of publication of application: **25.01.2017**
(21) Application number: 16179817.8
(22) Date of filing: 15.07.2016
(51) Int. Cl.: G01L 25/00, B64C 25/26, G01G 19/07, G01G 23/01, G01L 1/26, G01D 5/353, G01D 18/00, G01L 1/24

(54) **CALIBRATION OF TRANSDUCERS**

(30) Priority: 17.07.2015 GB 201512607
(71) Applicant: Airbus Operations Limited, Bristol BS34 7PA (GB)
(72) Inventor: HEALY, Mark, Filton, Bristol BS34 7PA (GB); SHEPHERD, Alan, Filton, Bristol BS34 7PA (GB)
(74) Representative: Pearson, James Ginn

(57) **Abstract**

A load measuring sensor set (8) on an aircraft is used under the control of a control unit on the aircraft (102). The load measuring sensor set (8) is calibrated and there is calibration data (316) associated with it. A code is retrieved (step 302) which identifies uniquely the sensor set, so that a remote database (218) can be interrogated (step 308) using the code to retrieve (step 314) the correct calibration data for the sensor set, for use by the control unit (16). The sensor set may utilise an optical-fibre (13) having a Fibre Bragg Grating arrangement (15) which provides optical signature characteristics that provide the unique code and having a Fibre Bragg Grating arrangement (14) configured to measure loads.

## Description

### BACKGROUND OF THE INVENTION

The present invention concerns the use or installation of calibrated transducers and/or the calibration of such transducers. More particularly, but not exclusively, this invention concerns a method of calibrating a group of transducer sets and a method of setting up or integrating a pre-calibrated transducer set in an apparatus. The invention also concerns the calibration of, and installation of, load sensors on an aircraft, or aircraft sub-assembly.

Transducers, such as sensors for measuring loads for example, typically require calibration so that the outputs of the transducer can be accurately converted into a measurement. For example, a set of sensors may be arranged on an object that, in use, sustains complex loading, such that each sensor provides a signal that depends on strain local to the sensor. The signals from the sensors may collectively be capable of measuring the loads sustained by the object. A suitable calibration matrix, that will be specific to the sensor set and the particular arrangement on the object, can be used to convert from the signals from the sensors into a load vector, which expresses the load sustained in the three orthogonal directions and optionally torque loads about one or more orthogonal axes and/or shear loads. Each sensor set, when integrated in a particular way in respect of a given object (apparatus, component, sub-assembly or otherwise), thus requires the use of the correct calibration data in order to yield valid measurements.

Sets of load sensors may be used to measure loads on aircraft components, such as landing gear, or parts thereof. It will be understood that such loads may be measured by means of sensing / measuring strain. Such load sensor sets may be used in load monitoring functions on the aircraft, including for example health monitoring and weight and balance monitoring. Ensuring that the correct calibration data is being used for a given sensor set on the aircraft typically involves the involvement of a skilled operator. As such, there is the risk of human error.

In the case of certain transducers requiring the use of calibration, the set of transducers are provided packaged in a larger component, for example a sub-assembly of the aircraft. The transducers may be hidden from view, and may be difficult to identify directly. There are therefore difficulties associated with verifying that the calibration data provided with such a component is correct. There are consequent difficulties associated with detecting when calibration data is incorrectly associated with a particular transducer set. When the component is itself a part of a larger system, for example when the transducer set is supplied with a sub-assembly (such as a landing gear assembly) that forms part of an aircraft and the calibration data is stored in a part of the larger system which is not the same as the component which comprises the transducer set, there is a risk of calibration data associated with an existing component remaining unchanged following the subsequent replacement of the component / transducer set with a component / transducer set requiring different calibration data.

One way in which an aircraft operator can be sure that the calibration data for a transducer set installed on the aircraft is correct, is to ensure that a calibration process is performed each time a new transducer set, or a new component on which a transducer set is provided, is installed on the aircraft. This however can be a time consuming process, and can therefore represent an expensive loss of operating time.

The present invention seeks to mitigate one or more of the above-mentioned problems. Alternatively or additionally, the present invention seeks to provide an improved method of calibrating a transducer set. Alternatively or additionally, the present invention seeks to provide an improved method of setting up a load measuring sensor on an aircraft. Alternatively or additionally, the present invention seeks to provide a way of robustly and verifiably ensuring that the correct calibration data is associated with a particular transducer set, for example when in situ on an aircraft sub-assembly.

### SUMMARY OF THE INVENTION

The present invention provides, according to a first aspect of the invention, a method of setting up a load measuring apparatus on an aircraft. The apparatus to be set-up includes a calibrated sensor set arranged to be operated under the control of a control unit which uses calibration data associated with the calibrated sensor set. The sensor set and the control unit are both located on the aircraft, for example inside a part of the aircraft. The method includes a step of retrieving a code that identifies uniquely the calibrated sensor set located on the aircraft. The method includes a step of interrogating a remote database using the code in order to retrieve the calibration data that is associated with the calibrated sensor set located on the aircraft. The database may be remote in the sense that it is not located on the aircraft. The method includes a step of transmitting, for example at least partially across a wireless link to/from the aircraft, the retrieved calibration data to the control unit on the aircraft.

Embodiments of this aspect of the invention may thus take the form of an automated sensor calibration data management system. For example, on power-up of an aircraft, an aircraft system may identify a particular pre-calibrated sensor set installed on the aircraft and request the corresponding calibration data from a central server, optionally over the internet, using a wireless aircraft to ground protocol. Using such an automated system, should a sub-assembly including the sensor set be removed and installed onto another aircraft, the receiving aircraft control unit can identify that it no longer contains the correct calibration data for the installed sub-assembly and can automatically acquire the correct calibration data. Embodiments incorporating such an automatic data management process may offer various benefits to airline operators. The possibility of human data entry is reduced or removed. The need for on-aircraft calibration of load measurement systems is reduced or removed. The management and transfer of calibration data from a factory (in which calibration is carried out) to the aircraft on which the equipment is installed is made simpler. All such possible benefits, when considered collectively, may cause an aircraft operator to perceive the system provided as a "plug and play" type load measurement system.

The method may include a step of providing the sensor set. The method may include a step of physically installing the sensor set on the aircraft. The sensor set may be manufactured separately from the rest of the aircraft. The sensor set may be provided as part of a component. The component may form at least part of an aircraft sub-assembly. For example, a sub-assembly, such as a landing gear assembly, may be manufactured which includes the sensor set. The sensor set may be located inside a component, for example so that it is hidden from view (when viewing the exterior of the component). The sensor set may be located inside an axle for (or of) an aircraft landing gear assembly.

The method may include a step of calibrating the sensor set to produce the calibration data that is associated with the calibrated sensor set. Embodiments of this aspect of the invention may thus take the form of a complete automated sensor calibration and associated data management system. Use of such a system may begin with an automatic calibration process in a factory which generates and stores the calibration data specific to each sub-assembly, in which a sensor set is installed. The sub-assembly may thereafter be installed on an aircraft.

As alluded to above, it may be that the sensor is integrated into a component or part thereof, for example an aircraft sub-assembly, before the step of calibrating the sensor set is performed. A calibration rig may be used during the calibration. It may be that the calibration rig is used to apply a sequence of two or more known loading conditions, which are subsequently used with outputs from the sensor set to calculate the calibration data. The step of calculating the calibration data may use the Skopinski method (as detail in the N.A.C.A report no. 1178, http://naca.central.cranfield.ac.uk/reports/1954/naca-report-1178.pdf the details of which are incorporated herein by reference thereto). The calibration data may then subsequently be used to convert outputs from the sensor set into calibrated loads, for example taking the form of a load vector. The calibration data may be in the form of a calibration matrix. The outputs of the sensor set and the number of independent parameters represented by the calibration data may be sufficient to convert the outputs of the sensor set into a definition of the loads sustained by the sensor set with at least 4 degrees of freedom (for example, longitudinal loads in three orthogonal directions and at least one measure of torque load), and possibly 5 or 6 degrees of freedom. The output from the sensor set may also provide information on the shear loads sustained. The output from the sensor set may also provide information on the bending moments sustained. The method may include the use of a calibration rig to apply loads, during calibration. The calibration rig may comprise a frame for mounting the component in/on which the sensor set is mounted. The calibration rig may comprise multiple actuators for applying different load conditions to a component under test.

The method may include a step of providing a unique code and physically associating the code with the calibrated sensor set. It may be that such a step is provided in advance of calibrating the sensor set to produce the calibration data.

The step of retrieving the code may be performed electronically. Thus, the code may be electronically retrieved from the sensor set or something that is physically associated with the sensor set. There may therefore be no need to have a human user manually key in (or otherwise input into a device) the code in order for the system to retrieve the correct calibration data.

There may be a step of storing the calibration data in the database together with the code that identifies uniquely the associated calibrated sensor set. Such a step may be conducted during a calibration process (including for example, immediately after the calibration data has been ascertained by means of the process described above involving the calibration rig). The calibration process may include performing, after such a unique code has been physically associated with the sensor set (or something that is physically associated with the sensor set), a step of retrieving electronically the code from the sensor set (or something that is physically associated with the sensor set) and then performing a step of storing both the calibration data in the database and the code so received.

It may be that the method includes both the process of calibrating the sensor and the process of setting up the sensor. Thus, the method may comprise the following calibrating steps: (a) providing a unique code and physically associating the code with the sensor set, (b) integrating the sensor set into an aircraft component, (c) calibrating the sensor set when so integrated to produce the calibration data, (d) retrieving electronically the code from the aircraft component and thereafter storing the calibration data in the database together with the code so retrieved; and may also comprise the following set-up steps: (e) installing the aircraft component on an aircraft, (f) retrieving electronically the code that has been physically associated with the sensor set, (g) interrogating a remote database using the code to retrieve the calibration data; and (h) transmitting (optionally wirelessly) the retrieved calibration data to the aircraft. The steps (a) to (h) referred to above may be conducted in that order. Steps (c) and (d) may be conducted in reverse order.

It may be that the method of calibrating one or more sensor sets can be considered independently of the method of setting-up a given sensor set. Thus, according to another aspect of the invention, there is provided a method of calibrating a group of multiple (for example at least three) load measuring sensor sets for use on different respective aircrafts. Such a method comprises performing the following steps in respect of each load measuring sensor set: (i) calibrating the given sensor set when integrated in or on an aircraft component to produce calibration data, (ii) retrieving (preferably electronically) a unique code from the aircraft component, the unique code being physically associated with and uniquely identifying the sensor set, and (iii) thereafter storing the calibration data in a database together with the unique code so retrieved. Such a method may also include an initial step of integrating the sensor set into an aircraft component. The method may also include a step of physically associating the unique code with the given sensor set (e.g. creating or applying the code).

Once a load measuring sensor has been set-up on an aircraft in accordance with the present invention, it may be desirable to verify periodically that the correct calibration data is matched with the sensor set(s) on the aircraft. There may thus be a subsequent, possibly independent method, in which the following steps are performed: (a) retrieving a code that identifies uniquely the calibrated sensor set located on the aircraft and (b) checking that that code matches a code stored with calibration data accessible by an aircraft control unit to verify that the calibration data is correctly associated with the sensor set located on the aircraft.

In the context of the first aspect of the invention, one or more (and preferably all) of the steps of retrieving the code from the sensor set, of interrogating the remote database using the code, of retrieving the calibration data, and of transmitting the retrieved calibration data to the control unit may be conducted electronically, for example under the control of the control unit.

The step of retrieving (for example electronically) the code (for example from an aircraft component) may be performed automatically. If a human being is required to perform manual steps as parts of the retrieving electronically of the code from the aircraft component, it is preferred that such manual steps do not include re-keying the code. Such manual steps may for example include scanning with a portable electronic scanner an optical code that is physically associated with the sensor set. Once manually scanned, the code may be automatically transmitted to a computer, possibly via the control unit on the aircraft, which both interrogates the remote database and transmits back to the control unit the correct calibration data for the sensor set. As such, the steps of the method employed in certain embodiments of the invention may be considered as semi-automated.

The step of interrogating the remote database using the code may include transmitting data across a computer network. The step of retrieving the calibration data may include transmitting data across a computer network. The computer network may be a closed / private network. The computer network may comprise one or more computers connected to the Internet. The computer network may comprise an airport computer network accessible only by permitted aircraft. The computer network may be in the form of a wireless computer network. The computer network may be in the form of a ground-based Wi-Fi-enabled network. The computer network may be in the form of an airport gate-link network.

Some or all of the data communication required in certain embodiments of the present invention on the aircraft may utilise an electronic data communications network on the aircraft. For certain types of sensors, such data communication may include the communication between the sensor set and the control unit on the aircraft. The electronic data communications network on the aircraft mentioned above may be a full duplex network. The network may be a packet-based switched network. The network may have built-in redundancy. The network may have determined network access characteristics. The network may have determined latency characteristics. The network may have determined bandwidth characteristics. The network may employ logical segregation of data flows. The network may be an Ethernet-based network (for example one based on the IEEE 802.3 standard). The network on the aircraft may be an avionics network specifically designed for aircraft use. Airbus has for example developed its own networking standard for handling of data in an aircraft, which is referred to by Airbus as "AFDX". Airbus' AFDX network is a switched full duplex network based on Ethernet network technology (based on the IEEE 802.3 standard). AFDX networks are typically fully compliant with Part 7 of ARINC 664 (one of the standards provided by Aeronautical Radio, Incorporated or "ARINC"). The term AFDX is used by Airbus as a trade mark but the technical characteristics of an AFDX network are well-defined and understood by those skilled in the art. The term "AFDX" alludes to the main characteristics of the network - i.e. one that is specifically designed for Avionics and is a Full DupleX network. Embodiments of the present invention may use an electronic data communications network on the aircraft in the form of an AFDX network.

It may be that the code is stored in a memory device that is physically associated with the sensor set.

It may be that the step of retrieving the code that identifies uniquely the calibrated sensor includes wirelessly transmitting the code. For example, the code may be embedded in an RFID (Radio Frequency Identification) device.

It may be that the step of retrieving the code that identifies uniquely the calibrated sensor includes a step of optically detecting the code. The code may be a visible code. The code may visible from the exterior of the component in which the sensor set is embedded, with the naked eye. For example, the code may be in the form of a QR-code or a bar-code. The optically retrievable code may instead not be visible with the naked eye from the exterior of the component. The optically retrievable code may be recorded within an optical device physically associated with, or otherwise forming a part of, the sensor set. For example, each sensor set may be in the form of an optical-fibre-based load sensor. The optical fibre of the load sensor may include a Fibre Bragg Grating arrangement which provides unique optical signature characteristics that thus serve as the code. In such a case, the control unit that is used to control the measurement of the loads with the calibrated sensor set may also perform the step of retrieving the code. The possibility of human error may thus be reduced, and the possibility of greater automation of the method (of calibration, of sensor set-up, or both) is provided.

The use of a Fibre Bragg Grating arrangement which provides unique optical signature characteristics which may serve as a code for identifying uniquely a given transducer set from a group of such transducer sets may have application independently of the first aspect of the invention. Thus, according to a second aspect of the invention there is provided a method of identifying a transducer set from a group of three or more such transducer sets, wherein the transducer set is in the form of an optical-fibre-based transducer set and has a Fibre Bragg Grating arrangement which provides optical signature characteristics that are unique compared to all of the other transducer sets in the group, the method including interrogating the transducer set to obtain the optical signature characteristics unique to that transducer set. One application of this aspect is a method of calibrating a group of transducer sets. Such a calibration method may comprise a step of calibrating each transducer set and, as a result, producing a set of calibration data associated with each transducer set. Such a calibration method may comprise a step of recording in a database, for each transducer set in the group, both the calibration data for the transducer set and data representing the unique optical signature characteristics of the transducer set. Such a calibration method may comprise a step of obtaining from each transducer set in the group its unique optical signature characteristics and creating the associated data.

Another application of this second aspect of the invention is a method of integrating a pre-calibrated transducer set in apparatus in which the transducer set is to be operated under the control of a control unit of the apparatus using calibration data associated with the transducer set. Such a transducer integrating method may include a step of installing the transducer set in the apparatus. Such a transducer integrating method may include a step of interrogating the transducer set, preferably once so installed, to obtain the optical signature characteristics unique to that transducer set. Such a transducer integrating method may include a step of interrogating a database using information from the optical signature characteristics so obtained to retrieve the calibration data that is uniquely associated with the transducer set. The database may comprise multiple calibration data sets each calibration data set being associated with a unique transducer set and identifiable by means of a unique code linked to the particular optical signature characteristics of each transducer set. Such a transducer integrating method may include a step of transmitting the calibration data so retrieved to the control unit. Instead of accessing the database, the transducer integrating method may include a step of using the optical signature characteristics so detected to verify that calibration data already accessible by the control unit is associated with the correct transducer set.

The Fibre Bragg Grating arrangement may include two or more Fibre Bragg Gratings that have different optical characteristics. One Fibre Bragg Grating may have phase shift characteristics different from another Fibre Bragg Grating. Each Fibre Bragg Grating may reflect light (whether visible or not) centred around a Bragg wavelength and having an associated bandwidth. One Fibre Bragg Grating may have a Bragg wavelength different from another Fibre Bragg Grating. The bandwidth of one Fibre Bragg Grating may be different from another Fibre Bragg Grating, optionally with both such Fibre Bragg Gratings having substantially the same Bragg wavelength. The two or more Fibre Bragg Gratings having such different optical characteristics may allow one transducer set to be distinguished from another.

The step of interrogating the transducer set to obtain the optical signature characteristics unique to that transducer set may include measuring the optical response of the transducer set when interrogated by means of an optical test signal. The optical test signal may comprise components having multiple different wavelengths. The optical test signal may be a broad-band signal. The optical test signal may comprise discrete narrowband components having multiple different wavelengths, possibly such that each such component has negligible overlap with the other components.

Another application of this second aspect of the invention is a method of managing the use of a group of transducer sets. Such a method may comprise the following steps: (i) calibrating each transducer set and, as a result, producing a set of calibration data associated with each transducer set; (ii) recording in a database, for each transducer set in the group, both the calibration data for the transducer set and data representing the unique optical signature characteristics of the transducer set; (iii) installing one such transducer set in apparatus in which the transducer set is operated under the control of a control unit using the calibration data for the transducer set; (iv) interrogating the transducer set to obtain the optical signature characteristics unique to that transducer set. The method may include a further step of (v) interrogating the database using information from the optical signature characteristics so obtained to ensure that the correct calibration data are used by the control unit in respect of the transducer set. It may be that the step of interrogating the database includes the control unit retrieving calibration data for the transducer set from the database. The method may include a further step of verifying that the optical signature characteristics detected in step (iv) correspond to the same transducer set as the calibration data currently stored for use by the control unit. It may be that the step of interrogating the optical signature characteristics is performed both during the calibrating process and again during the installing of the apparatus.

The transducer set may be in the form of one or more sensors, for example load or strain sensors. There may be more than ten transducer sets in the group. There may be more than 100 transducer sets in the group.

According to this second aspect of the invention there is provided a transducer in the form of an optical-fibre-based transducer set configured for measuring loads in accordance with any aspect of the present invention as claimed or described herein, including any optional features relating thereto. Each transducer set may have a first Fibre Bragg Grating arrangement configured to measure loads, and a second Fibre Bragg Grating arrangement configured to provide unique optical signature characteristics. The first and second Fibre Bragg Grating arrangements may each comprise multiple Fibre Bragg Gratings. There may be at least one Fibre Bragg Grating that is not common to both Fibre Bragg Grating arrangements. The first Fibre Bragg Grating arrangement may comprise multiple Fibre Bragg Gratings not belonging to the second Fibre Bragg Grating arrangement. The second Fibre Bragg Grating arrangement may comprise multiple Fibre Bragg Gratings not belonging to the first Fibre Bragg Grating arrangement. The first and second Fibre Bragg Grating arrangements may have no Fibre Bragg Gratings in common.

According to another aspect of the invention there is provided an electronic database product in accordance with any aspect of the present invention as claimed or described herein, including any optional features relating thereto. The electronic database product may for example comprise multiple records, each record corresponding to a transducer, for example a load measuring sensor on an aircraft. Each record may contain a set of calibration data associated with a transducer and a unique code that identifies uniquely the transducer.

According to another aspect of the invention there is provided a computer having memory, for example disk drive, RAM, ROM, or the like, on which an electronic database product as mentioned above is stored. The computer may be programmed with software that includes a communications module arranged to send and receive data over a computer network and a calibration data retrieval module. The communications module may be configured to receive a request to send calibration data, the request including an indication of a code that identifies uniquely a transducer set and an indication of the sender of the request. The calibration data retrieval module may be configured, with the use of the code, to retrieve from the database the calibration data that is associated with the transducer set identified. The communications module may also be configured, with the use of the indication of the sender of the request, to send to the sender of the request the calibration data retrieved by the calibration data retrieval module.

According to another aspect of the invention there is provided an aircraft including a calibrated transducer in accordance with any aspect of the present invention as claimed or described herein, including any optional features relating thereto. Such an aircraft may include an electronic memory device on which calibration data associated with the calibrated transducer is stored. Such an aircraft may include a control unit, which may include a computer processor configured to read data from such an electronic memory device. The calibrated transducer may be configured to be operated under the control of a control unit of the aircraft, for example with the use of calibration data stored on the electronic memory device.

According to another aspect of the invention there is provided a computer program product configured to cause, when the computer program is executed, a computer to form the computer or control unit in accordance with any aspect of the present invention as claimed or described herein, including any optional features relating thereto.

The following clauses set out various combinations of subject matter which are considered to be within the scope of the present patent application:
Clause 1. A method of setting up a load measuring sensor on an aircraft, wherein
   the loads are to be measured using a calibrated sensor set under the control of a control unit which uses calibration data associated with the calibrated sensor set,
   the sensor set and the control unit are both located on the aircraft, and
   wherein the method includes the following steps:
   retrieving a code that identifies uniquely the calibrated sensor set located on the aircraft;
   interrogating a remote database using the code to retrieve calibration data that is associated with the calibrated sensor set located on the aircraft; and
   transmitting the retrieved calibration data to the control unit.
Clause 2. A method according to Clause 1, wherein the method includes a step of calibrating the sensor set to produce the calibration data that is associated with the calibrated sensor set.
Clause 3. A method according to Clause 1 or Clause 2, wherein the method includes a step of providing a unique code and physically associating the code with the calibrated sensor set.
Clause 4. A method according to any preceding Clause, wherein the step of retrieving a code includes retrieving electronically the code from the sensor set or something that is physically associated with the sensor set.
Clause 5. A method according to the combination of Clauses 1 to 4, wherein the method includes the following steps:
   integrating the sensor set into an aircraft component,
   providing the unique code that identifies uniquely the associated calibrated sensor set and physically associating that unique code with the aircraft component,
   calibrating the sensor set when so integrated to produce the calibration data that is associated with the calibrated sensor set,
   retrieving electronically the code from the aircraft component and thereafter storing the calibration data in the database together with the code so retrieved,
   installing the aircraft component on an aircraft,
   and then conducting the steps of retrieving the code, interrogating the database to retrieve the calibration data, and transmitting the retrieved calibration data to the control unit, as recited in Clause 1.
Clause 6. A method according to any of Clauses 1 to 5, wherein the steps of retrieving the code from the sensor set, of interrogating the remote database using the code, of retrieving the calibration data, and of transmitting the retrieved calibration data to the control unit are all conducted electronically.
Clause 7. A method according to any preceding Clause, wherein one or both of the steps of interrogating the remote database using the code and of retrieving the calibration data are include transmitting data across a computer network.
Clause 8. A method according to any preceding Clause, wherein the code is stored in a memory device that is physically associated with the sensor set.
Clause 9. A method according to any preceding Clause, wherein the step of retrieving the code that identifies uniquely the calibrated sensor includes wirelessly transmitting the code.
Clause 10. A method according to any preceding Clause, wherein the step of retrieving the code that identifies uniquely the calibrated sensor includes a step of optically detecting the code.
Clause 11. A method of calibrating a group of at least three load measuring sensor sets for use on different respective aircrafts, wherein the method comprises performing the following steps in respect of each load measuring sensor set:
   integrating the sensor set into an aircraft component, the sensor set being physically associated with a unique code that identifies uniquely the sensor,
   calibrating the sensor set when so integrated to produce calibration data that is associated with the sensor set so calibrated, and
   retrieving electronically the unique code from the aircraft component and thereafter storing the calibration data in a database together with the code so retrieved.
Clause 12. A method of managing the use of a group of transducer sets, there being multiple transducer sets in the group, wherein
   each transducer set is in the form of an optical-fibre-based transducer set;
   each transducer set has a Fibre Bragg Grating arrangement which provides optical signature characteristics that are unique compared to all of the other transducer sets in the group;
   the method comprises the following steps:
   calibrating each transducer set and, as a result, producing a set of calibration data associated with each transducer set;
   recording in a database, for each transducer set in the group, both the calibration data for the transducer set and data representing the unique optical signature characteristics of the transducer set;
   installing one such transducer set in apparatus in which the transducer set is operated under the control of a control unit using the calibration data for the transducer set;
   interrogating the transducer set to obtain the optical signature characteristics unique to that transducer set; and
   interrogating the database using information from the optical signature characteristics so obtained to ensure that the correct calibration data are used by the control unit in respect of the transducer set.
Clause 13. A method of calibrating a group of transducer sets, there being multiple transducer sets in the group, wherein
   each transducer set is in the form of an optical-fibre-based transducer set;
   each transducer set has a Fibre Bragg Grating arrangement which provides optical signature characteristics that are unique compared to all of the other transducer sets in the group;
   the method comprises performing the following steps in respect of each transducer set of the group:
   calibrating each transducer set and, as a result, producing a set of calibration data associated with each transducer set; and
   recording in a database, for each transducer set in the group, both the calibration data for the transducer set and data representing the unique optical signature characteristics of the transducer set.
Clause 14. A method of integrating a pre-calibrated transducer set in apparatus in which the transducer set is to be operated under the control of a control unit of the apparatus using the calibration data for the transducer set, wherein
   each transducer set is in the form of an optical-fibre-based transducer set;
   each transducer set has a Fibre Bragg Grating arrangement which provides optical signature characteristics; and
   the method comprises the following steps
   installing the transducer set in the apparatus;
   interrogating the transducer set to obtain the optical signature characteristics unique to that transducer set
   interrogating a database using information from the optical signature characteristics so obtained to retrieve the calibration data that is uniquely associated with the transducer set, the database comprising multiple calibration data sets each calibration data set being associated with a unique transducer set and identifiable by means of a unique code linked to the particular optical signature characteristics of each transducer set,
   transmitting the retrieved calibration data to the control unit.
Clause 15. An electronic database product comprising multiple records, each record corresponding to a transducer and relating a set of calibration data associated with the transducer and a unique code that identifies uniquely the transducer, wherein the electronic database product is so configured that, when recorded in memory accessible by a computer, the electronic database product performs the role of the database of any preceding Clause.
Clause 16. A computer having memory on which an electronic database product according to Clause 15 is stored, wherein the computer is programmed with software that includes:
   a communications module arranged to send and receive data over a computer network and a calibration data retrieval module, wherein
   the communications module is configured to receive a request to send calibration data, the request including
      an indication of a code that identifies uniquely a transducer set and
      an indication of the sender of the request,
   the calibration data retrieval module is configured, with the use of the code, to retrieve from the database the calibration data that is associated with the transducer set identified, and
   the communications module is also configured, with the use of the indication of the sender of the request, to send to the sender of the request the calibration data retrieved by the calibration data retrieval module.
Clause 17. A transducer calibrated by means of a method according to any of Clauses 1 to Clause 14.
Clause 18. A transducer in the form of an optical-fibre-based transducer set configured for measuring loads, wherein
   each transducer set has a first Fibre Bragg Grating arrangement configured to measure loads, and
   a second Fibre Bragg Grating arrangement configured to provide unique optical signature characteristics,
   the first and second Fibre Bragg Grating arrangements each comprising multiple Fibre Bragg Gratings,
   there being at least one Fibre Bragg Grating that is not common to both Fibre Bragg Grating arrangements.
Clause 19. An aircraft including a calibrated transducer according to Clause 17 or Clause 18.
Clause 20. An aircraft according to Clause 19 further including
   an electronic memory device on which calibration data associated with the calibrated transducer is stored, and
   a control unit, which includes a computer processor configured to read data from the electronic memory device,
   the calibrated transducer being configured to be operated under the control of the control unit with the use of calibration data associated with the calibrated transducer set stored on the electronic memory device.
Clause 21. A computer program product configured to cause, when the computer program is executed, a computer to form the computer as defined in Clause 16.

It will of course be appreciated that features described in relation to one aspect of the present invention may be incorporated into other aspects of the present invention. For example, the method of the invention may incorporate any of the features described with reference to the apparatus of the invention and vice versa.

### DESCRIPTION OF THE DRAWINGS

Embodiments of the present invention will now be described by way of example only with reference to the accompanying schematic drawings of which:
Figure 1 shows an aircraft incorporating calibrated transducer sets according to a first embodiment of the invention;
Figure 2 is a schematic diagram showing the calibrated transducer sets of Figure 1 in greater detail;
Figure 3 is a schematic diagram showing an overview of the parts of the system used in performing a method used in the first embodiment of the invention;
Figure 4 is a flow diagram showing an outline of the steps used in the method of the first embodiment of the invention;
Figure 5 shows a system including a calibration rig used in performing a method in accordance with a second embodiment of the invention;
Figure 6 is a flow diagram showing an outline of the steps used in the method of the second embodiment of the invention;
Figure 7 is a flow diagram showing an outline of the steps used in the combined methods of the first and second embodiment of the invention;
Figure 8 shows a four wheel landing gear assembly incorporating calibrated transducer sets according to a third embodiment of the invention; and
Figure 9 shows a six wheel landing gear assembly incorporating calibrated transducer sets according to a fourth embodiment of the invention.

### DETAILED DESCRIPTION

There now follows a description of specific embodiments, including the first and subsequent illustrated embodiments. The embodiments generally relate to the automatic (or semi-automatic) calibration process and management of calibration data for use on aircraft systems and other systems, for example where load measurement is an integral part of the overall system operation. At least some of the envisaged embodiments concern a load measurement system comprising load sensor embedded in a landing gear axle assembly in a manner similar to that described in US patent application publication number US2009/0026313. Each load sensor is typically calibrated once installed into the aircraft wheel axle (or in other embodiments, once installed into the aircraft structure to be measured), to account for variation due to sensor manufacture and variation due to installation. If a load sensor is removed from the structure, the calibration data is no longer valid. Because of this, the assembly of load sensor and aircraft structure becomes a Line Replaceable Unit (LRU). The LRU of the aircraft structure and its associated load sensors is an example of a "sub-assembly" as referred to elsewhere in this document.

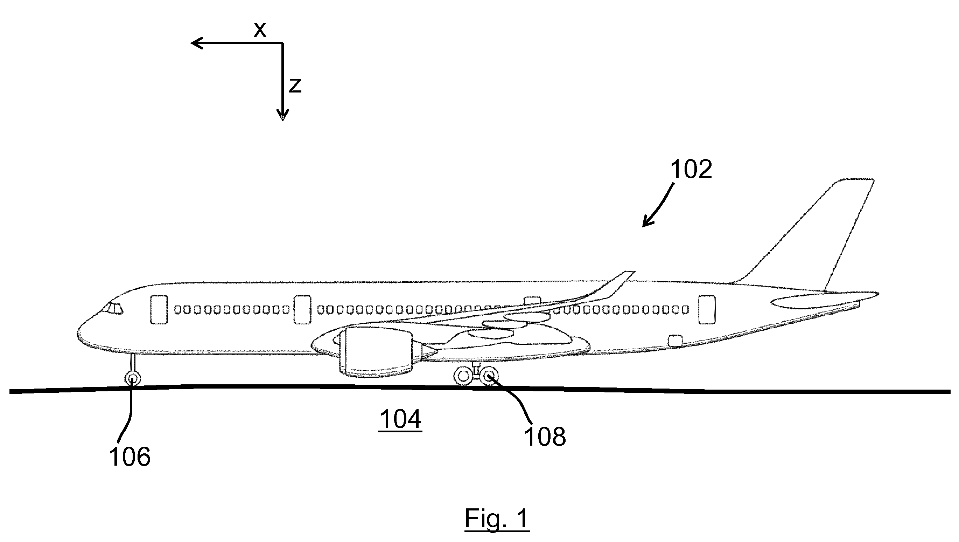

Figure 1 shows, in accordance with a first embodiment, an aircraft 102 on the ground 104 at an airport. The aircraft has a nose landing gear 106 ("NLG") and two sets of main landing gear ("MLG") 108, one on the left and one on the right of the aircraft (only the left MLG being in view in Figure 1). Each aircraft landing gear comprises a vertically extending main strut and left and right axles at the end of the main strut. Each axle is essentially a hollow tube that supports a wheel and brake assembly (not shown) on the outside, and systems equipment on the inside. Reference is made herein to the x-, y- and z- axes of the coordinate system of each landing gear. The general direction of the x-, y- and z- axes, when the aircraft is on flat level ground with all wheels aligned for travel in a direction along the length of the aircraft, is shown in Figure 1. In these embodiments, the coordinate system used will be that of the landing gear axle (aligned with gear centre). Thus, for each given axle, the y-axis is the axis of the axle, the z-axis is the (generally vertical) axis of the strut, and the x-axis is the axis that is perpendicular to both the y- and z- axes (the x-axis typically being horizontal and generally parallel to the longitudinal axis of the aircraft, when the wheels are aligned for travel in a direction along the length of the aircraft).

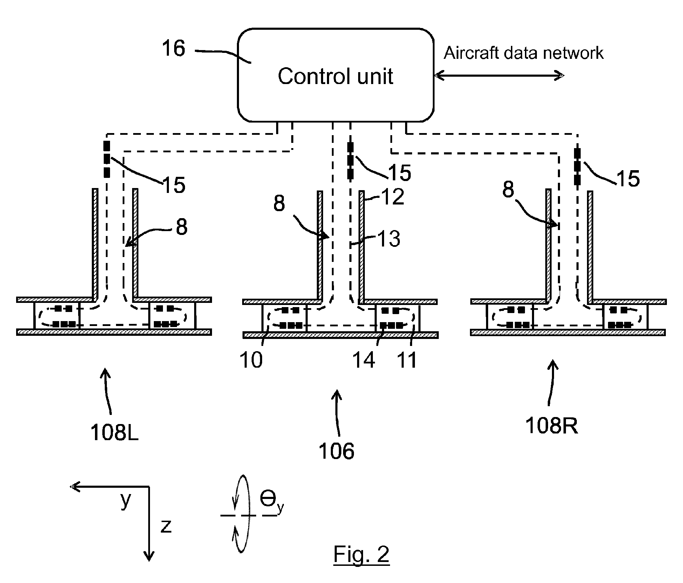

Figure 2 show parts of the main strut 12 and associated left and right axles of the left MLG 108L, the NLG 106, and the right MLG 108R. Each of the landing gear has a fibre-optic-based load sensor set 8 installed within the axles. The load sensor set 8 includes a fibre optic cable 13 having load sensors 10 for the left axle and load sensors 11 for the right axle. The sensors 10, 11 each comprise Fibre Bragg Grating sensors 14 written into the fibre optic cable 13 which reflect light in a way that depends on the local strain. The fibre optic cable and associated load sensors are mounted on an inner surface of the axle of the landing gear. There are load sensors arranged to respond to loads sustained in either of the x- or z- axes and to enable measurement of the torque (or moment) θy (about the y-axis). The arrangement and configuration of the Bragg Grating sensors, and the associated load measuring system, may (or may not) be as described in US2009/026313, the contents of which are fully incorporated herein by reference thereto. (It will be appreciated that other configurations, different from the measuring system of US2009/026313 may be used.) The fibre optic cable 13 is connected to a control unit 16, which is configured to interrogate the fibre optic cable 13. Pulsed light of a given known characteristics (wavelength, intensity, etc.) is transmitted from the control unit into the fibre optic cable 13. Certain wavelengths of light are reflected by the Bragg Grating sensors. Local strain affects the optical properties of the Bragg Grating sensors in a predictable manner. The control unit includes a light source (or at least is associated with a light source it can control) for this purpose.

The fibre optic cable 13 of each load sensor set 8 also includes multiple Fibre Bragg Gratings 15 that do not play any part in the load sensing performed by the sensor set 8. These Bragg Gratings have optical properties different from the Bragg Grating sensors 14. Thus, the load sensors have a variety of different Bragg wavelengths spanning a first range, and the Bragg Gratings 15 have a variety of different Bragg wavelengths spanning a second nonoverlapping range. The multiple Fibre Bragg Gratings 15 serve to provide a unique identification code (a "unique ID code") that uniquely identifies each load sensor set 8. It will be seen that Figure 2 shows that the three Fibre Bragg Gratings 15 gratings are integral with a chain containing ten Fibre Bragg Grating sensors 14. In this embodiment, there are thirty bands of Bragg wavelength and each of the three Fibre Bragg Gratings 15 has a Bragg wavelength from a different band. Such an arrangement provides for multiple different combinations of Bragg wavelengths.

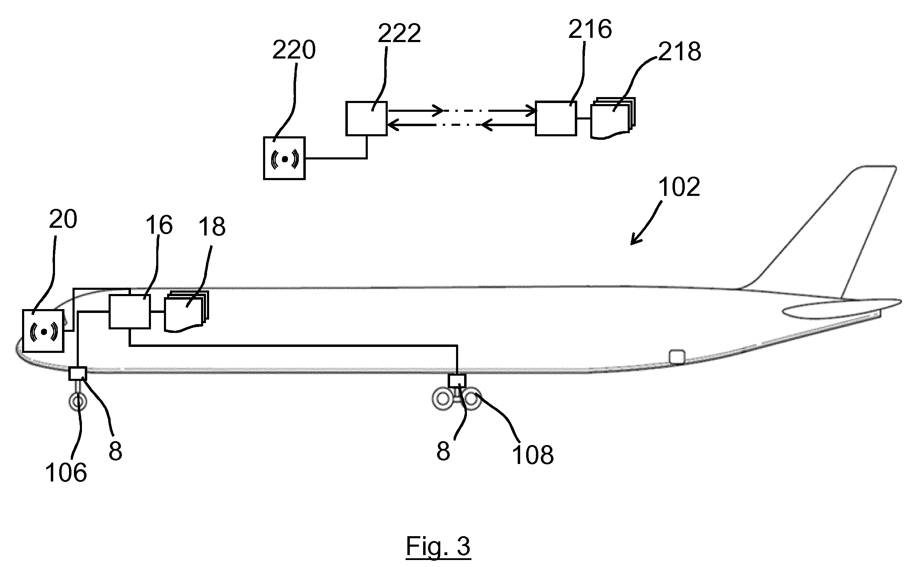

Figure 3 shows the aircraft 102 and the associated load measuring system. Thus, the NLG 106 has a load sensor set 8, which is connected to a central control unit 16 via fibre optic cable. The two MLGs (only one shown in Figure 3) each have a load sensor set 8, which is also connected to the central control unit 16 via fibre optic cable. The control unit 16 is located in the avionics bay of the aircraft and includes a memory 18 in which calibration data are stored. The calibration data enables the control unit to convert between the signals received from the load sensor sets 8 and values of the components of load sustained in the x- , y- and z- axes and the torque (or moment) about the y-axis (θ_{y}). The control unit 16 is also associated with a wireless communication device 20 that allows for wireless communication between the control unit 16 and a ground station. Data communication between the sensor sets and the control unit is conducted over fibre optic cable specifically provided for that purpose. Data communication between the control unit and the wireless communication device 20 is conducted across the aircraft's internal data network (in this case an AFDX network). Also shown in Figure 3 is a database 218 of calibration data. The database 218 includes multiple entries for different sensor sets, each entry including both the unique ID code of the sensor set and the associated calibration data. The database 218 is stored remotely from the aircraft on a memory device, such as a hard disc, accessible by a computer server 216. The computer server 216 is one of several computer devices in a computer network, including a computer device 222, located in the airport, connected to a wireless communication device 220 which facilitates wireless communication between the airport-based a computer device 222 and the aircraft.

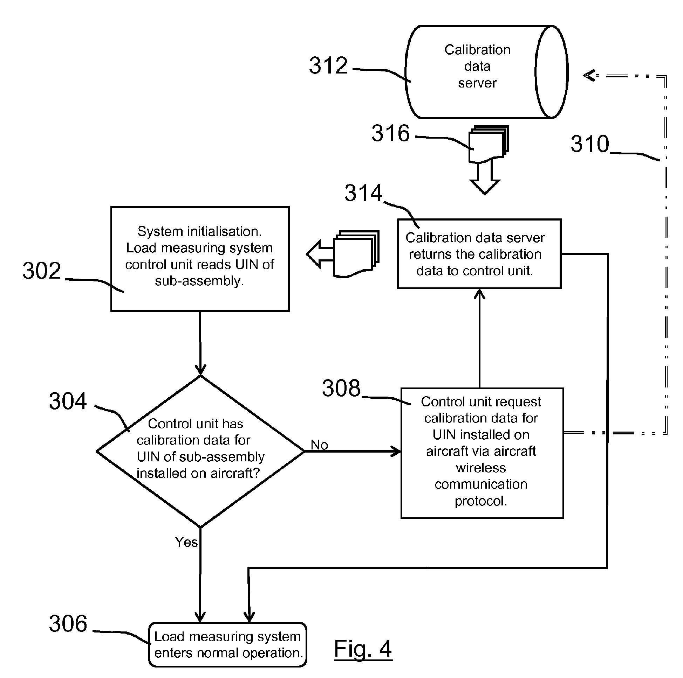

Figure 4 is a flow-chart illustrating the method employed to ensure that the correct calibration data is provided on the control unit.

At power-up, (step 302) for each axle sensor, the control unit reads the unique ID code (unique identification number or "UIN") that is encoded, by means of the FBGs 15 in the fibre optic cable of each axle sensor. The control unit compares (step 304) the ID code of the attached axle sensors against the ID codes for which it has calibration data stored in static memory. If the ID codes match then the control unit can flag a calibration data match and continue normal operation (step 306). If the ID codes are different then it must flag a calibration data mismatch and request the correct calibration data (step 308). The control unit transmits a message onto the aircraft's data network, requesting calibration data for the axle sensor for which it has no calibration data. The request (310) for calibration data is sent via the aircraft's Wi-Fi connection, over a gatelink connection, to the central calibration data server (312). The central calibration data server (step 314) transmits the requested calibration data (316) back to the aircraft where it is stored by the control unit. The control unit can then flag a calibration data match and continue normal operation (step 306). Provided that the calibration data remains in memory of the control unit and the sensors are not changed, subsequent operations should merely require verification of the ID numbers retrieved from the sensors and those stored in the memory of the control unit.

The gatelink connection used to facilitate communication between the aircraft and the central calibration data server may be in the form of any suitable secure network communications link. One suitable system that could be employed is Teledyne's "GroundLink® communications system" which provides for wireless communication between equipment on the aircraft and ground-based systems, which in the context of the present invention could include the server on which the database of calibration data is stored. Rockwell Collins' ARINC GLOBALink® system, which facilitates wireless data communications to and from the aircraft via VHF, VDL Mode 2, HF ground stations, and satellite services (essentially an ACARS system - i.e. an Aircraft Communications Addressing and Report System) is a suitable alternative. In the present embodiment, the central calibration data server 216 is located in the airport. Duplicate calibration data servers may be provided at other airports. In other embodiments, the calibration data server is provided off-site and is accessed via a secure link over the Internet. In certain embodiments, the wireless communication devices 20, 220 are in the form of "Wi-Fi" devices.

The first embodiment of the invention allows the calibration data to follow the sub-assembly automatically, with minimal human intervention, throughout the life of the component. Thus, there is no need for a human to manually supply or load into the aircraft's systems the correct calibration data. There is no need for a human to be involved in confirming that the calibration data provided is for the sensor set having the same UIN as the sensor set of the component / sub-assembly concerned.

This is useful when a sub-assembly is removed from one aircraft and installed on to another or when a sub-assembly is scrapped and replaced by a new sub-assembly. The aircraft system will not operate without the correct calibration data. In cases where the calibration data becomes degraded with time the sub-assembly can be sent for re-calibration at the original factory with the new data stored against the existing UIN. A calibration log containing all calibration data should be retained by the OEM to record the calibration history for each UIN as this will be required for certification compliance.

The method and apparatus of the first embodiment utilises a database of calibration data that has already been created and associated with sensor sets, including the sensor set of the aircraft of the first embodiment. A second embodiment of the invention concerns the creation of such a database.

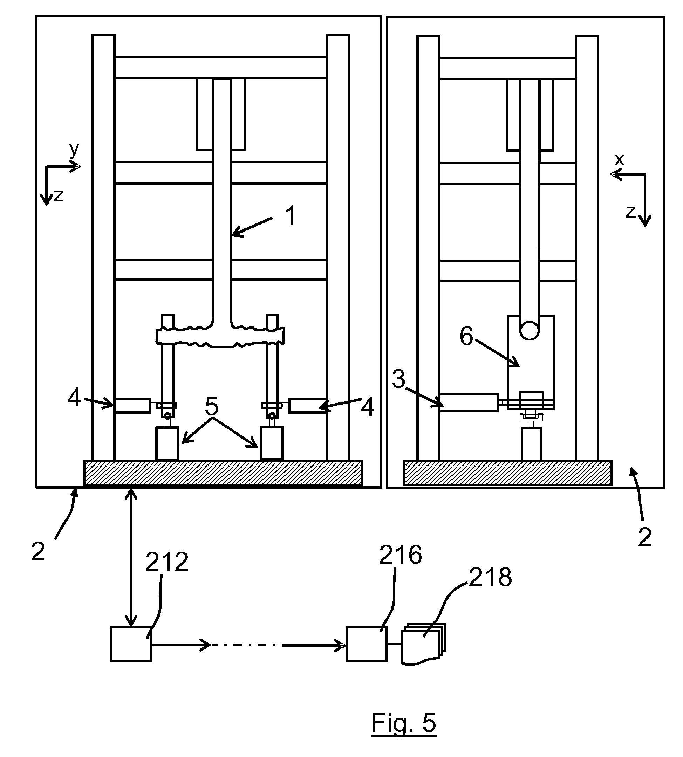

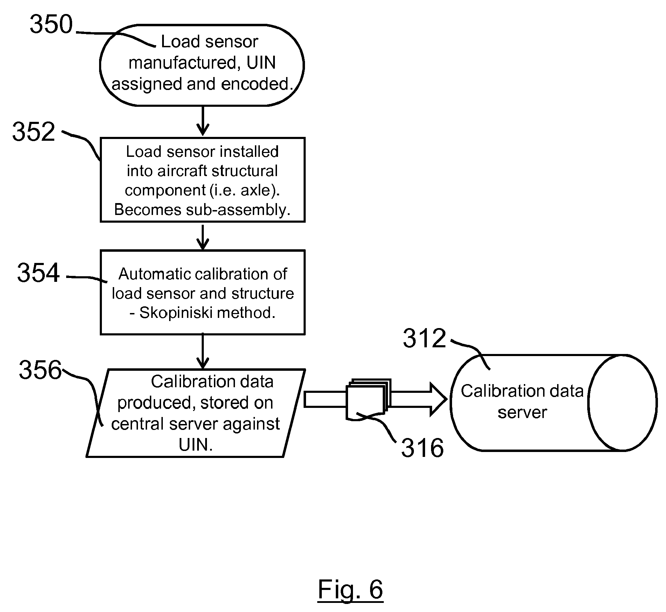

Figure 5 shows apparatus used in the method of the second embodiment, which includes a schematic illustration of a calibration rig 2 for calibrating a sensor set of a sliding tube sub-assembly. A sliding tube 1 including an axle in which the sensor set is mounted is shown in Figure 5 mounted within the calibration rig. On the left hand side of Figure 5 a front view is shown, whereas a side view is shown on the right hand side. The calibration rig 1 is designed to receive the sub-assembly comprising the sliding tube 1 in a manner similar to the manner in which it would be attached to the aircraft. The calibration rig 1 includes connectors for connecting to the input(s)/output(s) channels of the sensor set so that the sensor set can interface with a computer 212 which performs the role of a control unit 212. The control unit 212 is also connected to actuators that are configured to apply known loads via the rig 2 to the sliding tube 1 under test. The actuators are able to apply horizontal loads in the x-direction perpendicular to the axis of the axle (Fx actuators 3), horizontal loads in the y-direction along the axis of the axle (Fy actuators 4), vertical loads in the z-direction (Fz actuators 5), and torque loads about the axis of the axle (those θ_{y} actuators are not shown separately in the Figure). Figure 5 also shows a loading bracket 6. The calibration of a sensor set supplied inside sliding tube 1 will now be described with reference to Figure 6, which shows a flow-chart illustrating the calibration method used.

The optical fibre sensor set is manufactured (step 350) to have a unique identification number ("UIN") which is encoded into it by means of multiple Fibre Bragg Gratings having a unique collection of Bragg wavelengths. The sensor set is then fixed inside the axle of a sliding tube 1, thus forming a sub-assembly, which is then mounted in the load calibration rig of Figure 5 (step 352). The automated calibration process is then performed (step 354). As part of this automated calibration process, the calibration rig control unit 212 identifies the UIN of the sub-assembly, by means of optically interrogating the sensor set. The calibration control unit then causes the rig to step though a sequence of pre-programmed load vectors and receives the data from the sensor set for each load vector. A large set of load vectors are then correlated with the measured sensor output for each load case using a method developed by Skopinski et al (N.A.C.A report no.1178, "Calibration of strain-gage installations in aircraft structures for the measurement of flight loads". The method of Skopinski et al effectively relates to calibrating strain-gage installations in aircraft structures, particularly on the wing. Proceeding in this way, a statistical calibration matrix is developed. Use of the Skopinski method in this way ensures that the calibration process is insensitive to the particular position and orientation of the sensor element in the sub-assembly and other manufacturing variations of the sensor set and the axle sub assembly. Next (step 356), the calibration data 316 so generated is automatically uploaded by the calibration rig control unit 212 onto the central calibration data server 312 together with the UIN, so that at a later time, the UIN may be used to interrogate the calibration data server 312 to retrieve the correct calibration data 316 for the particular sub-assembly concerned.

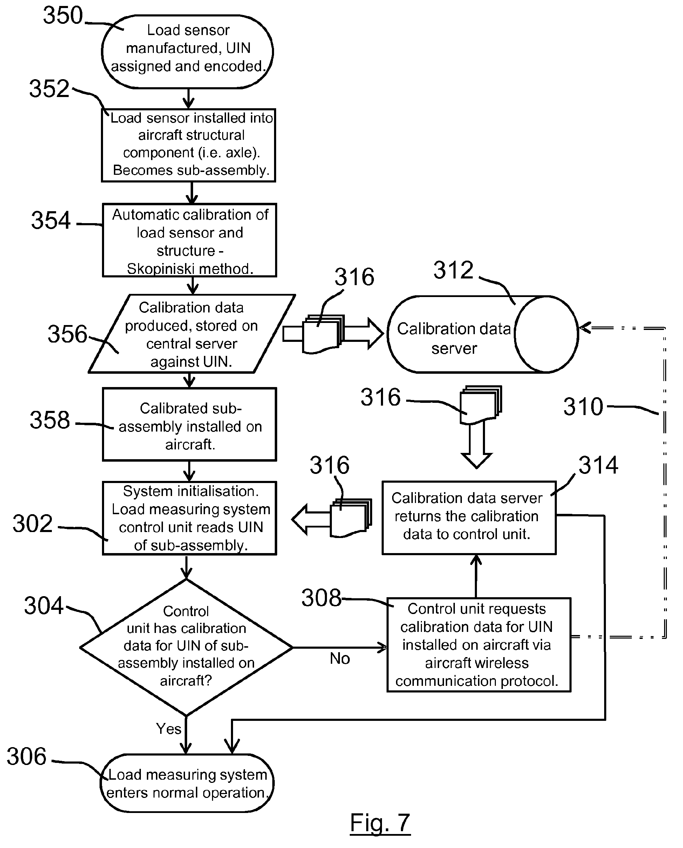

Different service providers may implement the sensor set-up method of the first embodiment (typically an airline operator) and the sensor calibration method of the second embodiment (typically the manufacturer / provider of the sub-assembly or aircraft). Figure 7 however shows the two methods as a single flow diagram. Figure 7 includes additionally the step (358) of installing the calibrated sub-assembly on the aircraft (which is done after the calibration data 316 generated during the automated calibration process has been uploaded to the central calibration data server 312) and before the system initialisation step of the set-up process (steps 302 to 314).

The above-described first embodiment provides an automated method for retrieving the correct calibration data for a sensor set on an aircraft, and/or for confirming that the correct calibration data has already been retrieved. A third embodiment concerns a semi-automated method for retrieving the correct calibration data for a sensor set on an aircraft, and/or for confirming that the correct calibration data has already been retrieved. Instead of using a UIN that is embedded in the sensor system, a simpler means of providing a UIN is employed in the third embodiment. In the third embodiment, a QR code is fixed to an accessible part of the landing gear assembly associated with the particular axle. The QR code is a unique code, as compared to all other codes assigned to other systems stored on the calibration server database. The QR code is fixed prior to calibration of the sensor set in the calibration rig. The QR code is then scanned manually with a scanner and associated (automatically) with the calibration data. The operator is prompted to do this immediately before the otherwise automated calibration process is commenced (but could equally be requested to be supplied immediately after the calibration process performed in the rig has been completed). When the component / sub-assembly containing the sensor set is then installed on the aircraft, a portable scanner with user interface communicates wirelessly with the control unit 16 on the aircraft. The operator is prompted during set-up, to scan the QR code, for the component / sub-assembly concerned. The operator is also required to identify the landing gear for which the data is relevant. This information is then used, in a similar manner to that described above, to retrieve the calibration data for that sub-assembly via a secure server link to the central calibration data server.

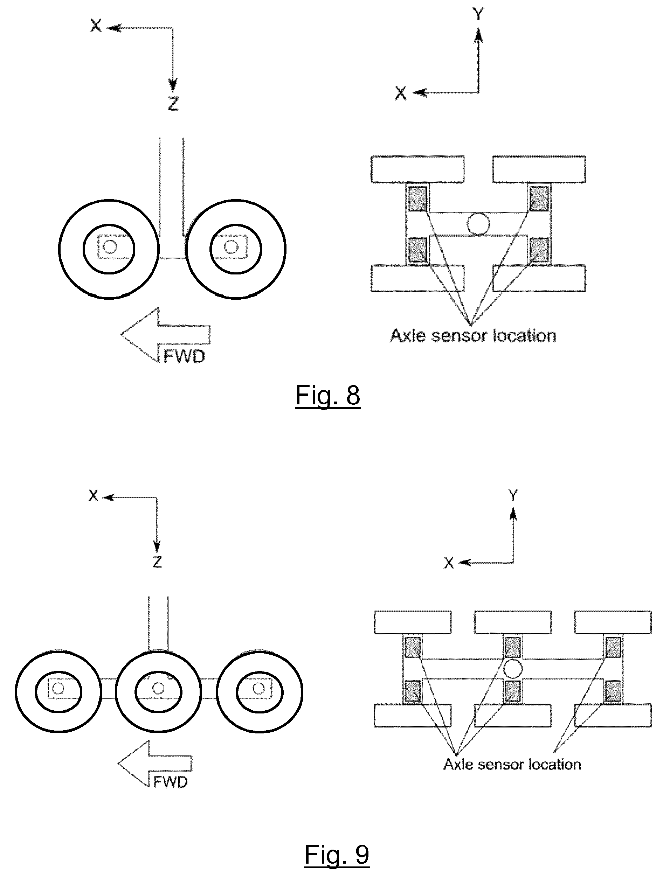

Figure 2 shows a set-up for a multiple single axles on an aircraft. Figure 8 shows, according to a third embodiment, a set-up used for load sensing in a four-wheel bogey, using Fibre Bragg Grating sensors in a fibre optic based sensor set-up. There are four such sensors provided in the axles as shown in the Figure. The operation and function of the individual sensors is similar to that described in relation to the first embodiment. Similarly, Figure 9 shows, according to a fourth embodiment, a set-up used for load sensing in a six-wheel bogey, using Fibre Bragg Grating sensors in a fibre optic based sensor set-up. There are six such sensors provided in the axles as shown in the Figure. The operation and function of the individual sensors is similar to that described in relation to the first embodiment.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The set-up may utilise a greater number of separately detectable Bragg wavelengths in order to provide for more unique identification numbers and/or more FBG strain sensors. There may be a different number of Fibre Bragg Gratings per sensor (in each axle) used for strain measurement. There may be a different number (for example as many as 12) Fibre Bragg Gratings for the unique identification number.

The strain gauges used to act as load sensors need not be in the form of Bragg Grating sensors. The embodiments of the invention have application in relation to other types of load sensors.

It may be that a first fibre optic load sensing system is provided on the left-hand side of the axle and a second, separate, fibre optic load sensing system is provided on the righthand side of the axle.

In the third embodiment, instead of using the optical QR codes, other detectable codes could be provided. For example, a traditional barcode could be used. Optical Character Recognition (OCR) of an alphanumeric code could be used, providing the opportunity to have a human check that the code has been correctly read by the scanner. An RFID chip could be used instead.

In the case of the third embodiment, the QR codes may comprise other data in addition to the UIN which serves to allow for cross-checking that the user has scanned the correct code during set-up. For example there may be data within the QR code which enables the system to ascertain whether the sensor set is installed on a NLG, on the right MLG or on the left MLG. This data could be used as a cross-check against indication inputted by the manual user concerning the position of the landing gear, or as an alternative means of providing such information.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of setting up a load measuring sensor on an aircraft, wherein
the loads are to be measured using a calibrated sensor set under the control of a control unit which uses calibration data associated with the calibrated sensor set,
the sensor set and the control unit are both located on the aircraft, and
wherein the method includes the following steps:
retrieving a code that identifies uniquely the calibrated sensor set located on the aircraft;
interrogating a remote database using the code to retrieve calibration data that is associated with the calibrated sensor set located on the aircraft; and
transmitting the retrieved calibration data to the control unit.

2. A method according to claim 1, wherein the method includes a step of calibrating the sensor set to produce the calibration data that is associated with the calibrated sensor set.

3. A method according to claim 1 or claim 2, wherein the method includes a step of providing a unique code and physically associating the code with the calibrated sensor set.

4. A method according to any preceding claim, wherein the step of retrieving a code includes retrieving electronically the code from the sensor set or something that is physically associated with the sensor set.

5. A method according to the combination of claims 1 to 4, wherein
the method includes a step of integrating the sensor set into an aircraft component, the unique code that identifies uniquely the associated calibrated sensor set being physically associated with the aircraft component,
the step of calibrating the sensor set to produce the calibration data that is associated with the calibrated sensor set is performed when the sensor set is so integrated,
retrieving electronically the unique code from the aircraft component and thereafter storing the calibration data in the database together with the unique code so retrieved, and
after the aircraft component is installed on an aircraft, conducting the steps of retrieving the code, interrogating the database to retrieve the calibration data, and transmitting the retrieved calibration data to the control unit, as recited in claim 1.

6. A method according to any preceding claim, wherein the steps of (a) retrieving the code from the sensor set, (b) interrogating the remote database using the code, (c) retrieving the calibration data, and (d) transmitting the retrieved calibration data to the control unit are all conducted electronically and/or wherein one or both of steps (b) interrogating the remote database using the code and (c) retrieving the calibration data include transmitting data across a computer network.

7. A method according to any preceding claim, wherein the code is stored in a memory device that is physically associated with the sensor set.

8. A method according to any preceding claim, wherein the step of retrieving the code that identifies uniquely the calibrated sensor includes wirelessly transmitting the code.

9. A method according to any preceding claim, wherein the step of retrieving the code that identifies uniquely the calibrated sensor includes a step of optically detecting the code.

10. A method according to claim 10, wherein the sensor set is in the form of an optical-fibre-based transducer set.

11. A method according to claim 9 or claim 10, wherein each sensor set has a Fibre Bragg Grating arrangement which provides optical signature characteristics that are unique to each respective sensor set.

12. A method of calibrating a group of at least three load measuring sensor sets for use on different respective aircrafts, wherein the method comprises performing the following steps in respect of each load measuring sensor set:
integrating the sensor set into an aircraft component, the sensor set being physically associated with a unique code that identifies uniquely the sensor,
calibrating the sensor set when so integrated to produce calibration data that is associated with the sensor set so calibrated, and
retrieving electronically the unique code from the aircraft component and thereafter storing the calibration data in a database together with the code so retrieved.

13. A computer having memory on which an electronic database product is stored, wherein
the electronic database product comprises multiple records, each record corresponding to a sensor set and relating a set of calibration data associated with the sensor set and a unique code that identifies uniquely the sensor set, the electronic database product being so configured that, when recorded in memory accessible by a computer, the electronic database product performs the role of the database of any preceding claim, and
wherein the computer is programmed with software that includes:
a communications module arranged to send and receive data over a computer network
and a calibration data retrieval module, wherein
the communications module is configured to receive a request to send calibration data, the request including
an indication of a code that identifies uniquely a sensor set and
an indication of the sender of the request,
the calibration data retrieval module is configured, with the use of the code, to retrieve from the database the calibration data that is associated with the sensor set identified, and
the communications module is also configured, with the use of the indication of the sender of the request, to send to the sender of the request the calibration data retrieved by the calibration data retrieval module.

14. A software product being in the form of one or both of the electronic database product of claim 13 and a computer program product comprising the software for programming the computer of claim 13.

15. An aircraft comprising a sensor set having one or more sensors sensor set that have each been set up or configured in accordance with the method of any of claims 1 to 12.
